# EUROPEAN PATENT SPECIFICATION

(11) **EP 4 082 970 B1**
(45) Date of publication and mention of the grant of the patent: **27.11.2024**
(21) Application number: 20908282.5
(22) Date of filing: 08.12.2020
(51) Int. Cl.: C01F 5/02, C01F 7/02, C08L 83/05, C08L 83/06, C08L 83/07, C09K 5/14, C08K 3/01, C08K 3/22, C08G 77/20, C08K 9/08, C08L 83/04, C08G 77/12

(54) **THERMALLY CONDUCTIVE SILICONE RESIN COMPOSITION**
WÄRMELEITFÄHIGE SILIKONHARZZUSAMMENSETZUNG
COMPOSITION DE RÉSINE DE SILICONE THERMOCONDUCTRICE

(30) Priority: 26.12.2019 JP 2019236990
(43) Date of publication of application: 02.11.2022
(73) Proprietor: Shin-Etsu Chemical Co., Ltd., Tokyo 100-0005 (JP)
(72) Inventor: ITO, Takanori, Annaka-shi, Gunma 379-0224 (JP); ENDO, Akihiro, Annaka-shi, Gunma 379-0224 (JP); TSUKADA, Junichi, Annaka-shi, Gunma 379-0224 (JP)
(74) Representative: V.O.
(86) International application number: PCT/JP2020/045728
(87) International publication number: WO 2021/131681

(56) References cited:
- WO-A1-2015/098719
- CN-A- 101 402 798
- JP-A- 2007 070 608
- JP-A- 2015 071 662
- JP-A- H06 293 861
- JP-A- H07 292 251
- JP-A- H09 151 324
- No further relevant documents disclosed

## Description

### FIELD OF THE INVENTION

The present invention relates to a thermally conductive silicone resin composition and, more specifically, relates to a thermally conductive silicone resin composition which may be used as a heat transfer material which is preferably used for the cooling of electronic components by thermal conduction at the thermal interface of a heat generating electronic component and a heat sink or at the interface of a heat dissipating member such as a circuit board. Specifically, the present invention relates to a thermally conductive silicone resin composition which may be used, for example, as a thermally conductive resin compound and a thermally conductive resin molded body which are arranged between a heat dissipating component and a heat dissipating part in an electronic device, and used for heat dissipation.

### BACKGROUND OF THE INVENTION

Accompanying the high performance, high speeds, the miniaturization, and high integration of LSI chips such as a CPU, a driver IC and memory which are used in electronic devices such as personal computers, digital video disks and cellular phones, a large amount of heat is produced by the chips themselves, and the increase in temperature of the chip due to the heat causes malfunction or destruction of the chip. Therefore, numerous heat dissipation methods and heat dissipation members used therein have been proposed for controlling the increase in temperature of the chips during operation.

Recently, electronic devices used heat sinks which use a metal plate having a high thermal conductivity, such as aluminum and copper, in order to suppress the increase in temperature of the chips during operation. This heat sink conducts the heat produced by the chip, and the heat is released from the surface due to the temperature difference with the outside air.

In order to effectively transmit the heat produced by the chip to the heat sink, it is necessary for the heat sink to be in close contact with the chip. However, since there are differences in the heights and the tolerance of each chip due to the assembly process, a sheet having flexibility or grease is interposed between the chip and the heat sink, and heat conduction from the chip to the heat sink is realized via this sheet or grease.

Sheets have excellent handling in comparison to a grease and, therefore, thermally conductive sheets (thermally conductive silicone rubber sheets) formed from a thermally conductive silicone rubber have been used in various fields.

Japanese Patent Application Laid-Open No. Sho 47-32400 (Patent Literature 1) discloses an insulative composition comprising 100 to 800 parts by mass of at least one type of metal oxide selected from beryllium oxide, aluminum oxide, aluminum hydroxide, magnesium oxide and zinc oxide, relative to 100 parts by mass of a synthetic rubber such as silicone rubber.

As a heat dissipation material which may be used in places in which insulation is not necessary, Japanese Patent Application Laid-Open No. Sho 56-100849 (Patent Literature 2) discloses an addition-curable silicone rubber composition comprising 60 to 500 parts by mass of a thermally conductive powder such as silica, silver, gold and silicon.

However, there are the problems that all of these thermally conductive materials have a low thermal conductivity and, when a large amount of a thermally conductive filler is highly filled in order to increase thermal conductivity, the fluidity decreases in the case of a liquid silicone rubber composition, and the degree of plasticity increases in the case of a millable type silicone rubber composition. Therefore, the moldability becomes very poor in both cases.

Therefore, as a method for solving these problems, Japanese Patent Application Laid-Open No. Hei 1-69661 (Patent Literature 3) discloses a highly thermally-conductive rubber/plastic composition filled with 10 to 30% by mass of alumina particles having an average particle size of 5 µm or less, and the balance amount of alumina consisting of spherical corundum particles which have an average particle size of a single particle of 10 µm or more, and have a shape without a cutting edge. Japanese Patent Application Laid-Open No. Hei 4-328163 (Patent Literature 4) discloses a thermally conductive silicone rubber composition comprising a base material which comprises a combination of a rubber organopolysiloxane having an average polymerization degree of 6,000 to 12,000 and an oily organopolysiloxane having an average polymerization degree of 200 to 2,000, and comprising 500 to 1,200 parts by mass of spherical aluminum oxide powder.

In order to increase the thermal conductivity of a silicone composition, a method for filling a higher amount of a thermally conductive filler relative to a polymer is common. However, the thermally conductive filler such as alumina oxide (specific gravity 3.9) and zinc oxide (specific gravity 5.6) has a higher specific gravity compared to that of a silicone polymer, and the greater the filling amount is in order to increase the thermal conductivity, the greater the specific gravity of the composition tends to become. Aluminum oxide has a remarkably high Mohs hardness of 9, and when shear is applied during the manufacture of a thermally conductive silicone composition, wear on the inner walls of the reaction vessel and the stirring blades progresses easily.

Recently, electric vehicles equipped with lithium-ion batteries have the problem of weight reduction of the entire vehicle in order to further realize long distance driving. The weight of mobile devices and wearable devices that may be directly worn by a human being cannot be ignored. Japanese Patent Application Laid-Open No. 2011-89079 (Patent Literature 5) discloses a silicone composition having a specific gravity of 2.0 in which aluminum hydroxide having a low specific gravity is filled in a silicone polymer. However, the thermal conductivity is low in the range of 1.5 W/m • K, and it is undeniable that there was a lack of capacity for cooling the heat generated from large capacity devices these days. With aluminum hydroxide alone, it is remarkably difficult to obtain a thermally conductive silicone resin composition with a thermal conductivity exceeding 3.5 W/m ·K which may be applied to a wide range of heat generating bodies, even if the filling amount of the filler is increased.

Further thermally conductive silicone resin compositions are disclosed, for instance, in CN 101 402 798 A (Patent Literature 6).

### PRIOR LITERATURE

### [Patent Literatures]

[Patent Literature 1] Japanese Patent Application Laid-Open No. Sho 47-32400(1972)
[Patent Literature 2] Japanese Patent Application Laid-Open No. Sho 56-100849(1981)
[Patent Literature 3] Japanese Patent Application Laid-Open No. Hei 1-69661(1989)
[Patent Literature 4] Japanese Patent Application Laid-Open No. Hei 4-328163(1992)
[Patent Literature 5] Japanese Patent Application Laid-Open No. 2011-89079
[Patent Literature 6] Chinese Patent Application CN 101 402 798 A

### SUMMARY OF THE INVENTION

### PROBLEMS TO BE SOLVED BY THE INVENTION

Here, when magnesium oxide is compared with aluminum oxide, the Mohs hardness of magnesium oxide is 6 and the specific gravity is 3.65, which is lighter than alumina, and thus, the aforementioned problems are less likely to occur. Although magnesium oxide is inferior to aluminum hydroxide from the viewpoint of weight reduction, magnesium oxide shows better values than aluminum oxide and aluminum hydroxide from the viewpoint of thermal conductivity. Therefore, when aluminum oxide, magnesium oxide, and aluminum hydroxide are used together as a thermally conductive filler, it is expected that a lighter thermally conductive silicone resin composition may be obtained, and the progression of wear on the inner walls of the reaction vessel and the stirring blades is suppressed more without sacrificing thermal conductivity, compared to a composition comprising aluminum oxide alone as the thermally conductive filler at the same filling amount.

However, magnesium oxide is disadvantageous in that it has a high hygroscopicity. For example, Japanese Patent Application Laid-Open No. Hei 5-239358 discloses a thermally conductive silicone rubber composition comprising magnesium oxide obtained by sintering a specific magnesium hydroxide at 1100 to 1600°C. However, a high hygroscopicity and a strong alkalinity are shown, and as a result, cracking occurs easily in the silicone rubber, and there is concern about significant curing deterioration. Japanese Patent Application Laid-Open No. Hei 7-292251 discloses a thermally conductive silicone resin composition having excellent moisture resistance obtained by treating the surface of the magnesium oxide with silazane. However, since the particle size of the magnesium oxide is very small, such as 1 µm, the improvement of thermal conductivity is not expected, even if the filling amount of the magnesium oxide is increased. Nothing is stated about whether the aforementioned surface treatment method shows a suitable effectiveness when a powder having a larger particle size was used. Therefore, regarding the use of magnesium oxide, it is necessary to ensure reliability in high humidity, while anticipating a light weight and an effect which may suppress the wear of the equipment.

The present inventors have conducted research in consideration of the aforementioned circumstances. One of the objects of the present invention is to provide a thermally conductive silicone resin composition which has good thermal conductivity, a light weight (namely, a light weight per unit volume), and good reliability in high humidity, and a molded body thereof.

### MEANS TO SOLVE THE PROBLEMS

The present inventors have conducted research to solve the aforesaid problems and found that, on account of a skillful combination of a blending ratio of magnesium oxide having a specific surface area of 0.4 m²/ g or less and aluminum hydroxide and, more preferably, on account of a skillful combination of a blending ratio of the magnesium oxide, aluminum hydroxide, and aluminum oxide, and on account of filling them in a high amount in an addition-reaction curable silicone resin composition, a thermally conductive silicone molded body which has good thermal conductivity, a light weight (that is, the specific gravity is light) and, furthermore, has excellent reliability in high humidity, is provided.

That is, the present invention provides a thermally conductive silicone resin composition comprising the following components (A) to (E):
(A) an organopolysiloxane having at least two alkenyl groups each bonded to a silicon atom in an amount of 100 parts by mass,
(B) an organohydrogen polysiloxane having at least two hydrogen atoms each bonded to a silicon atom in an amount such that the ratio of the number of the hydrogen atoms bonded to a silicon atom relative to the number of the alkenyl group in component (A) is 0.1 to 2,
(C) a thermally conductive filler in an amount of 2500 to 6000 parts by mass,
(D) a catalytic amount of an addition-reaction catalyst, and
(E) an addition-reaction controlling agent in an amount of 0.01 to 1 parts by mass, wherein the thermally conductive filler (C) comprises magnesium oxide having a specific surface area of 0.4 m²/g or less in an amount of 20 to 50 wt%, and aluminum hydroxide in an amount of 10 to 30 wt%, relative to the total weight of component (C).

Further, the present invention provides a cured product obtained by curing the aforesaid thermally conductive silicone resin composition, and a thermally conductive silicone heat-dissipating sheet comprising the cured product.

### EFFECTS OF THE INVENTION

The thermally conductive silicone resin composition of the present invention has a suitable viscosity, good handling property, and has excellent moldability. A molded body obtained from the resin composition has a specific gravity of 3.1 g/cm³ or less, is light weight, and has a thermal conductivity of 3.5 W/m·K or more. The molded body has excellent reliability without a remarkable increase in hardness, even after a high humidity test.

### DETAILED DESCRIPTION OF THE INVENTION

The present invention will be described below in further detail.

### [Alkenyl Group Containing Organopolysiloxane]

An alkenyl group-containing organopolysiloxane (A) is an organopolysiloxane having at least two alkenyl groups each bonded to a silicon atom per molecule, and is the main agent of the composition of the present invention. Generally, the main chain consists of repeating diorganosiloxane units. The molecule may contain a branched structure in a part of the molecular structure, or the molecule may be circular. A linear diorganopolysiloxane is preferred in view of the physical properties such as the mechanical strength of the cured product.

Examples of a functional group other than an alkenyl group bonded to a silicon atom include an unsubstituted or substituted monovalent hydrocarbon group, for example, an alkyl group such as a methyl group, an ethyl group, a propyl group, an isopropyl group, a butyl group, isobutyl group, tert-butyl group, a pentyl group, a neopentyl group, a hexyl, a heptyl group, an octyl group, a nonyl group, a decyl group and a dodecyl group; a cycloalkyl group such as a cyclopentyl group, a cyclohexyl group and a cycloheptyl group; an aryl group such as a phenyl group, a tolyl group, a xylyl group, a naphthyl group and a biphenyl group; an aralkyl group such as a benzyl group, a phenylethyl group, a phenylpropyl group and a methylbenzyl group; and those hydrocarbon groups wherein a part or all of the hydrogen atoms bonded to a carbon atom of these groups is substituted with a halogen atom such as a fluorine atom, a chlorine atom, or a bromine atom, or a cyano group, including, for example, a chloromethyl group, a 2-bromoethyl group, a 3-chloropropyl group, a 3,3,3-trifluoropropyl group, a chlorophenyl group, a fluorophenyl group, a cyanoethyl group and a 3,3,4,4,5,5,6,6,6-nonafluorohexyl group. Typical examples are hydrocarbons with 1 to 10 carbon atoms and, in particular, typical examples are hydrocarbons with 1 to 6 carbon atoms. An unsubstituted or substituted alkyl group having 1 to 3 carbon atoms such as a methyl group, an ethyl group, a propyl group, a chloromethyl group, a bromoethyl group, a 3,3,3-trifluoropropyl group and a cyanoethyl group, and an unsubstituted or substituted phenyl group such as a phenyl group, a chlorophenyl group and a fluorophenyl group are preferable. The functional groups other than the alkenyl group bonded to a silicon atom are not limited to being the same.

Examples of the alkenyl group include hydrocarbons with 2 to 8 carbon atoms such as a vinyl group, an allyl group, a propenyl group, an isopropenyl group, a butenyl group, a hexenyl group and a cyclohexenyl group. Among them, a low-molecular-weight alkenyl group such as a vinyl group and an allyl group is preferable, and a vinyl group is particularly preferable.

The organopolysiloxane may have a kinematic viscosity at 25°C of 10 to 100,000 mm²/s, and preferably has a kinematic viscosity in the range of 500 to 50,000 mm²/s. If the viscosity is too low, the storage stability of the composition obtained becomes poor. If the viscosity is too high, the extensibility of the composition obtained may become poor. In the present invention, the kinematic viscosity is the value determined by an Ostwald Viscometer.

The organopolysiloxane (A) may be either alone, or organopolysiloxanes having different viscosities may be used in combination.

### [Organohydrogenpolysiloxane]

Component (B) is an organohydrogenpolysiloxane which has an average of 2 or more, preferably 2 to 100, hydrogen atoms directly bonded to a silicon atom (SiH) per molecule and functions as a cross-linking agent of component (A). The SiH in component (B) and the alkenyl group in component (A) are subjected to a hydrosilylation reaction in the presence of (D) a platinum group catalyst, which will be described later in detail, to provide a three-dimensional network structure having a crosslinked structure. If the number of the SiH group is less than 1 on average, there is the risk that the composition may not cure.

An example of the average structural formula of the organohydrogen polysiloxane is represented as follows: 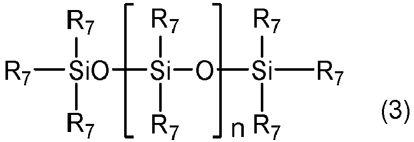 wherein R⁷ is, independently of each other, an unsubstituted or a substituted monovalent hydrocarbon group having no aliphatic unsaturated bond or a hydrogen atom, and at least two of R⁷ are hydrogen atoms, and n is an integer of 1 or more.

In formula (3), examples of an unsubstituted or substituted monovalent hydrocarbon group represented by R⁷ having no aliphatic unsaturated bond preferably include a hydrocarbon group having 1 to 10 carbon atoms, and particularly preferably 1 to 6 carbon atoms. Examples of the hydrocarbon group include an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group and a dodecyl group; a cycloalkyl group such as a cyclopentyl group, a cyclohexyl group and a cycloheptyl group; an aryl group such as a phenyl group, a tolyl group, a xylyl group, a naphthyl group and a biphenyl group; an aralkyl group such as a benzyl group, a phenylethyl group, a phenylpropyl group and a methylbenzyl group; and those hydrocarbon groups wherein a part or all of the hydrogen atoms bonded to a carbon atom of these groups is substituted with a halogen atom such as a fluorine atom, a chlorine atom, or a bromine atom, or a cyano group, including, for example, a chloromethyl group, a 2-bromoethyl group, a 3-chloropropyl group, a 3,3,3-trifluoropropyl group, a chlorophenyl group, a fluorophenyl group, a cyanoethyl group and a 3,3,4,4,5,5,6,6,6-nonafluorohexyl group. A substituted or unsubstituted alkyl group having 1 to 3 carbon atoms such as a methyl group, an ethyl group, a propyl group, a chloromethyl group, a bromoethyl group, a 3,3,3-trifluoropropyl group and cyanoethyl group, and an unsubstituted or substituted phenyl group such as a phenyl group, a chlorophenyl group and a fluorophenyl group are preferable. The groups represented by R⁷ are not limited to being the same.

The amount of component (B) is an amount that the ratio of the number of SiH groups in component (B) relative to the number of alkenyl groups in component (A) is 0.1 to 2, preferably 0.3 to 1.5, and more preferably 0.5 to 1. If the amount of component (B) is less than the aforementioned lower limit, there is the risk that the composition may not cure, or the strength of the cured product may be insufficient and the shape cannot be maintained as a molded body and handled. If the amount of component (B) is in excess the aforementioned upper limit, the flexibility of the cured product may be lost, and thermal resistance increases significantly, which are not preferable.

### [Thermally Conductive Filler]

Component (C) is a thermally conductive filler. The present invention is characterized in that the composition has a specific blending ratio of magnesium oxide having a specific surface area and aluminum hydroxide as the thermally conductive filler (C). The amount of the thermally conductive filler (C) in the silicone resin composition of the present invention is 2500 to 6000 parts by mass, preferably 3500 to 6000 parts by mass, relative to 100 parts by mass of component (A). If the amount of the thermally conductive filler is less than the aforementioned lower limit, the thermal conductivity of the silicone resin composition obtained may be lost, and the storage stability of the composition may be poor. If the amount is in excess of the aforementioned upper limit, there is the risk that the strength of the cured product of the thermally conductive silicone composition decreases, and the cured product may become difficult to handle which is not preferable.

The ratio of magnesium oxide and aluminum hydroxide, as the thermally conductive filler, is such that the amount of the magnesium oxide having a specific surface area of 0.4 m²/ g or less is 20 to 50 wt% relative to the total weight of component (C), and the amount of aluminum hydroxide is 10 to 30 wt% relative to the total weight of component (C).

The amount of magnesium oxide is preferably 23 to 45 wt%, and more preferably 25 to 40 wt%. If the amount of magnesium oxide is less than the aforementioned lower limit, the thermally conductivity of the cured product decreases, the intended specific gravity cannot be obtained, and a light weight product is difficult to be provided. If the amount of magnesium oxide is in excess of the aforementioned upper limit, the viscosity of the thermally conductive silicone resin composition increases and the moldability of the cured product becomes poor.

Magnesium oxide is characterized as having a specific surface area of 0.4 m²/g or less. The specific surface area is preferably 0.3 m²/g or less, more preferably 0.2 to 0.01 m²/g and, even more preferably, 0.1 to 0.01 m²/g. If the specific surface area of magnesium oxide is greater than the aforementioned upper limit, moisture absorption is likely to occur in high humidity, and the conversion from magnesium oxide to magnesium hydroxide is promoted and, therefore, the reliability of the silicone resin cured product (which will be described later in detail) decreases significantly in high humidity. Note that, in the present invention, the specific surface area may be determined by a gas adsorption method, for example, determined by an automated specific surface area analyzer, ex Shimadzu Corporation.

The volume average particle diameter of magnesium oxide is preferably 30 to 120 µm, and more preferably 50 to 90 µm. Here, the volume average particle diameter indicates the diameter at which the large side and the small side are equivalent when divided in two with the average particle size as a boundary, when the volumetric distribution of the particles was determined by Microtrac (laser diffraction scattering method). Note that, all of the average particle sizes described in the following text are defined by this.

The amount of aluminum hydroxide is 10 to 30 wt%, preferably 13 to 29 wt%, and more preferably 15 to 25 wt%, relative to the total weight of component (C) as described above. If the amount of the aluminum hydroxide is less than the aforementioned lower limit, it is difficult to contribute a weight reduction to the thermally conductive silicone resin composition. If the amount is in excess of the aforementioned upper limit, the thermal conductivity of the thermally conductive silicone resin composition tends to decrease which is not preferable.

The volume average particle diameter of the aluminum hydroxide is preferably 2 to 50 µm, and more preferably 5 to 20 µm. The measurement method of the volume average particle diameter is as described above. The specific surface area of the aluminum hydroxide is not particularly limited, and is typically 0.1 to 5 m²/g.

The thermally conductive silicone resin composition of the present invention may further comprise a thermally conductive filler as component (C) other than magnesium oxide and aluminum hydroxide. A conventionally known thermally conductive filler may be used as the other thermally conductive filler. For example, at least one selected from aluminum oxide, aluminum nitride, boron nitride, zinc oxide, and magnesium hydroxide is preferable. When the thermal conductivity, the electrical insulation and costs are considered comprehensively, aluminum oxide is particularly preferable. The volume average particle diameter of the aluminum oxide is preferably 1 to 90 µm, and more preferably 10 to 70 µm. One type or combinations of thermally conductive fillers having different volume average particle diameters may be used. The amount of thermally conductive filler other than magnesium oxide and aluminum hydroxide should be a residual amount by which the total weight of the thermally conductive filler is 100 wt%. For example, the amount of aluminum oxide is preferably 20 to 70 wt%, and more preferably 30 to 50 wt%.

In the present invention, magnesium oxide having a low Mohs hardness is used together with aluminum hydroxide and, therefore, wear to the reaction kettle is less likely to occur, compared to a composition comprising aluminum oxide alone as the thermally conductive filler. When the reaction kettle is made of a metal such as aluminum, the contamination of the conductive components with respect to the insulator may occur.

### [Addition-reaction Catalyst]

Component (D) is an addition-reaction catalyst, and promotes the addition-reaction of the alkenyl group of component (A) with an SiH group of component (B). The catalyst may be a well-known catalyst based on a platinum group metal which is used in a hydrosilylation reaction. Examples of the catalyst include elemental platinum group metals such as platinum (including platinum black), rhodium, and palladium; platinum chlorides such as H₂PtCl₄·nH₂O, H₂PtCl₆·nH₂O, NaHPtCl₆·nH₂O, KaHPtCl₆·nH₂O, Na₂PtCl₆·nH₂O, K₂PtCl₄·nH₂O, PtCl₄·nH₂O, PtCl₂, Na₂HPtCl₄·nH₂O, provided that, in the aforesaid formulas, n is an integer of from 0 to 6, and is preferably 0 or 6, chloroplatinic acid and chloroplatinic salts, alcohol-modified chloroplatinic acid (refer to US Patent No. 3,220,972), complexes of chloroplatinic acid with olefins (refer to US Patent No. 3,159,601; US Patent No. 3,159,662; and US Patent No. 3,775,452), platinum group metals such as platinum black and palladium supported on carriers such as alumina, silica and carbon; rhodium-olefin complexes; chlorotris(triphenylphosphine)rhodium (known as Wilkinson catalyst); and platinum chloride, chloroplatinic acid or chloroplatinic salts with vinyl-containing siloxanes, particularly complexes of vinyl-containing cyclic siloxanes. The amount of component (D) may be a catalytic amount, that is, an effective amount for promoting the addition-reaction. Typically, the amount of the catalyst may be such that the volume of a platinum group metal element is in the range of 0.1 to 1000 ppm, relative to component (A).

### [Addition-reaction Controlling Agent]

The silicone composition of the present invention comprises (E) an addition-reaction controlling agent. Component (E) may be a well-known addition-reaction controlling agent used in an addition-reaction curable silicone composition, and is not particularly limited. Examples of the addition-reaction controlling agent include acetylene compounds such as 1-ethynyl-1-hexanol and 3-butin-1-ol; various nitrogen compounds, organic phosphorus compounds, oxime compounds, and organic chloro compounds. The amount of component (E) may be an effective amount which controls the addition-reaction. The amount may be 0.01 to 1 part by mass, more preferably 0.05 to 0.5 part by mass, relative to 100 parts by mass of component (A).

### [Surface Treatment Agent]

The silicone resin composition of the present invention may further contain a surface treatment agent (F). In preparing the composition, component (F) functions to uniformly disperse the thermally conductive filler (C) in a matrix consisting of the organopolysiloxane (A). A dimethylpolysiloxane which is represented by the following general formula (1) in which one end of the molecular chain is blocked by a trialkoxy group is preferable as the surface treatment agent (F): 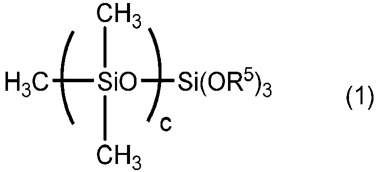 wherein R⁵ is, independently of each other, an alkyl group having 1 to 6 carbon atoms, and c is an integer of from 5 to 100.

The amount of component (F) in the composition is 100 to 300 parts by mass, preferably 150 to 250 parts by mass, relative to 100 parts by mass of component (A). On account of the amount within the range, a thermally conductive filler may be uniformly dispersed in the matrix consisting of the organosiloxane. If the amount of component (F) relative to component (A) is too large, oil separation may be induced which is not preferable. If the amount of component (F) is too small, the wettability of the polyorganosiloxane and the thermally conductive filler decreases, and there is the risk that the composition cannot be formed.

### [Plasticizer]

The composition of the present invention may further comprise, as a plasticizer, (G) an organopolysiloxane which is represented by the following general formula (2):

R⁶-(SiR⁶₂O)_{d}SiR⁶₃ (2)

wherein R⁶ is, independently of each other, a monovalent hydrocarbon group having 1 to 8 carbon atoms and no aliphatic unsaturated bond, and d is an integer of from 5 to 2000. The organopolysiloxane (G) has a kinematic viscosity at 25°C of 10 to 100,000 mm²/s. The component may be appropriately used to impart properties such as a viscosity modifier of the thermally conductive composition, and is not particularly limited. The component may be used singly, or combinations thereof may be used together.

The aforementioned R⁶ is, independently of each other, a monovalent hydrocarbon group having 1 to 8 carbon atoms and no aliphatic unsaturated bond. Examples of R⁶ include an alkyl group such as a methyl group, an ethyl group, a propyl group, an isopropyl group, a butyl group, an isobutyl group, a tert-butyl group, a pentyl group, a neopentyl group, a hexyl group, a heptyl group, and an octyl group; a cycloalkyl group such as a cyclopentyl, a cyclohexyl and a cycloheptyl group; an aryl group such as a phenyl group, a tolyl group and a xylyl group; an aralkyl group such as a benzyl group, a phenylethyl group, a phenylpropyl group and a methylbenzyl group; and those hydrocarbon groups wherein a part or all of the hydrogen atoms bonded to a carbon atom of these groups is substituted with a halogen atom such as a fluorine atom, a chlorine atom, or a bromine atom, or a cyano group, including, for example, a chloromethyl group, a 2-bromoethyl group, a 3-chloropropyl group, a 3,3,3-trifluoropropyl group, a chlorophenyl group, a fluorophenyl group, a cyanoethyl group and a 3,3,4,4,5,5,6,6,6-nonafluorohexyl group. Typical examples are a monovalent hydrocarbon group with 1 to 10 carbon atoms, and, in particular, typical examples are a monovalent hydrocarbon group with 1 to 6 carbon atoms. An unsubstituted or substituted alkyl group having 1 to 3 carbon atoms such as a methyl group, an ethyl group, a propyl group, a chloromethyl group, a bromoethyl group, a 3,3,3-trifluoropropyl group and a cyanoethyl group, and an unsubstituted or substituted phenyl group such as a phenyl group, a chlorophenyl group and a fluorophenyl group are preferable. A methyl group and a phenyl group are particularly preferable.

The kinematic viscosity of the organopolysiloxane at 25°C is preferably 10 to 100,000 mm²/s, further preferably 100 to 10,000 mm²/s. If the kinematic viscosity is lower than 10 mm²/s, a cured product obtained from the composition is likely to cause oil bleeding. If the kinematic viscosity is larger than 100,000 mm²/s, there is the risk that flexibility of the obtained thermally conductive composition may be poor.

In the formula (2), d may be a value such that the kinematic viscosity of the organopolysiloxane is in the aforementioned range. "d" is preferably an integer of from 5 to 2000, and more preferably an integer of from 10 to 1000.

The amount of component (G) in the composition of the present invention is not particularly limited, as long as the desired effect as a plasticizer may be obtained. Generally, the amount is preferably 1 to 40 parts by mass, more preferably 5 to 20 parts by mass, relative to 100 parts by mass of component (A). When the amount of component (G) is in the aforementioned range, it is easy to maintain a good flowability and workability in the thermally conductive composition prior to curing, and it is easy to fill the thermally conductive filler (C) in the composition.

### [Viscosity of the Composition]

The resin composition of the present invention has a viscosity at 25°C of 600Pa·s or less in an uncured state, preferably 500 Pa·s or less and, even more preferably, 400 Pa·s or less. The lower limit of the viscosity is not particularly limited, but is 50 Pa·s or more, preferably 75 Pa·s or more and, in particular, 100 Pa·s or more. The viscosity is determined at 25°C using a rotational rheometer viscometer.

The curing method of the thermally conductive silicone resin composition of the present invention is not particularly limited, and may be similar to the curing conditions of a well-known addition-reaction curable silicone rubber composition. For example, curing may be sufficiently conducted at room temperature, and may be conducted with heating if need. The additional curing is preferably conducted at 120°C for 10 minutes. The cured product (molded body) which is obtained from the composition of the present invention has an excellent thermal conductivity. The molding method of the composition is not particularly limited. Depending on the molding method, a cross-linking reaction may be promoted in the vicinity of the surface so that the molded product may be handled sufficiently, and the internal crosslink density may be decreased to, thereby, obtain a good compressibility and low thermal resistance. Since the inside is cross-linked, a thermally conductive silicone molded product with oil bleed resistance is produced.

### [Method of preparing the silicone thermally conductive molded product]

The thermally conductive silicone resin composition of the present invention is applied on a substrate, such as a resin film, and cured to obtain a silicone thermally conductive molded product. The resin film may be a film having a thermal deformation temperature of 100°C or more which may tolerate a heat treatment after bonding, for example, may be properly selected from a film made of PET or PBT polycarbonate. A post-measurement type blade coater, a gravure coater, a kiss-roll coater, or a spray coater may be used as a coating device for applying the organohydrogen polysiloxane oil to the resin film at a uniform thickness.

### [Thermal Conductivity of the Molding]

The thermal conductivity of the cured product (molded body) in the present invention has a value at 25°C, determined by the hot-disk method, of desirably 3.5 W/m·K or more, preferably 4.0 W/m·K or more, and more preferably 4.5 W/m·K or more. If the thermal conductivity is less than 3.5 W/m·K, it is difficult to apply the cured product to a heat generating body which generates a large amount of heat and requires high heat dissipation, and the practical range of the molded body is narrowed. The upper limit is not limited, and generally is 15 W/m·K or less, and particularly 10 W/m·K or less. The cured product of the present invention may have a specific gravity of 3.1 g/cm³ or less, preferably 3.0 g/cm³ or less, and particularly 2.6 to 3.0 g/cm³, and has a light weight.

### EXAMPLES

The present invention will be explained below in further detail with reference to a series of the Examples and the Comparative Examples, although the present invention is in no way limited by these Examples.

Components (A) to (G) used in the following Examples and Comparative Examples are as follows.
Component (A):
   (A-1) organopolysiloxane represented by the following formula (4) and having a kinematic viscosity of 400 mm²/s.
   (A-2) organopolysiloxane represented by the following formula (4) and having a kinematic viscosity of 5000 mm²/s. 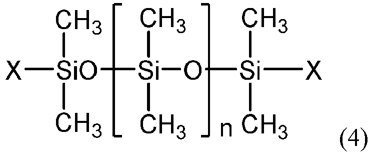 wherein, X is a vinyl group, and n is a number such that the organopolysiloxane has the aforesaid viscosity.
Component (B): organohydrogen polysiloxane represented by the following formula: 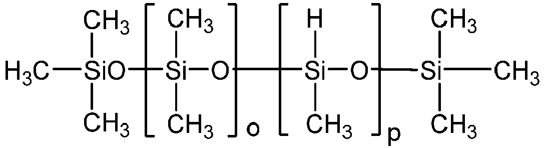 Average degree of polymerization: o = 28, p = 2
Component (C):
   (C-1) Aluminum oxide having an average particle size of 1 µm
   (C-2) Aluminum oxide having an average particle size of 10 µm
   (C-3) Aluminum hydroxide having an average particle size of 8 µm
   (C-4) Aluminum oxide having an average particle size of 70 µm
   (C-5) Magnesium oxide having an average particle size of 60 µm and a BET of 0.05 m²/g
   (C-6) Magnesium oxide having an average particle size of 60 µm and a BET of 0.2 m²/g
   (C-7) Magnesium oxide having an average particle size of 80 µm and a BET of 0.5 m²/g
Component (D): 5% solution of 2-ethylhexanol chloroplatinic acid (addition-reaction catalyst)
Component (E): ethynyl methylidene carbinol (addition-reaction controlling agent)
Component (F): dimethylpolysiloxane represented by the following formula and in which one end was blocked by a trimethoxysilyl group: 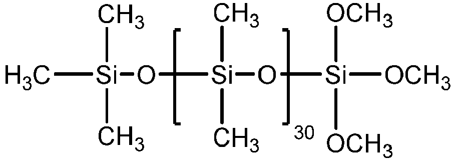
Component (G): dimethylpolysiloxane represented by the following formula (plasticizer):

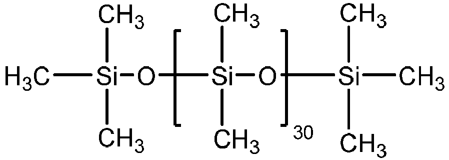

### [Examples 1 to 6 and Comparative Examples 1 to 6]

The amounts of the aforementioned components (A) to (G) are as described in the following Tables 1 and 2.

The components (A), (C), (F) and (G) were mixed for 60 minutes with a planetary mixer to which component (D) and component (E) were added and an effective amount (5 parts) of an internal releasing agent (represented by the following formula (α)) was further added, and further mixed for 60 minutes. The internal releasing agent functions to promote leaving of a cured product from a separator. Component (B) was added to the mixture, and mixed for 30 minutes to obtain a thermally conductive silicone resin composition. The ratio of the number of the hydrogen atoms bonded to the silicon atom in component (B) relative to the number of alkenyl groups in component (A), SiH/SiVi, was 1.1.

The internal releasing agent is described below. 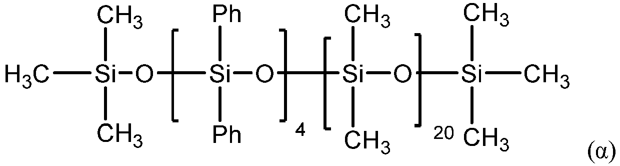 The viscosity (Pa·s) at 25°C of each thermally conductive silicone resin composition was determined with a rotational rheometer viscometer.
The results are shown in Tables 3 and 4.

The thermally conductive silicone resin composition obtained was placed between two PET films and then cured with a press at 120°C for 10 minutes to obtain a thermally conductive silicone molded body having a thickness of 6 mm. The thermal conductivity and the specific gravity were determined for the obtained molded body according to the following methods. The hardness of the molded body before and after aging at 85°C and 85% Rh for 1000 hours was determined and compared so as to evaluate the reliability of the molded product. The results are shown in Tables 3 and 4.

### [Evaluation]

(1) Moldability: When the thermally conductive silicone resin composition was molded, the composition which could be easily completed to pour into the mold was evaluated as "Good". The thermally conductive silicone resin composition whose viscosity was too high and handling thereof was difficult, and which was difficult to complete to pour into the mold was evaluated as "Poor".
(2) Thermal conductivity: The thermal conductivity of two of the molded body having a thickness of 6 mm obtained as described above were determined by a thermal conductivity meter (TPA-501, product name, ex Kyoto Electronics Manufacturing Co., Ltd.).
(3) Specific gravity: The specific gravity was determined by the underwater substitution method.
(4) Reliability under a high humidity: The initial hardness of the molded body was determined by an Asker C Durometer. Then the molded body was aged for 1000 hours in the conditions of 85°C and 85%RH, and then the hardness of the molded body was determined again. The results are shown in Table 1. If the degree of change was 30 or more, cracking of the silicone highly occurs and the reliability is poor.

**[Table 1]**

| Example | | | 1 | 2 | 3 | 4 | 5 | 6 | 7 |
|---|---|---|---|---|---|---|---|---|---|
| Composition, part by mass | (A) Alkenyl group-containing organosiloxane | | 100 | 100 | 100 | 100 | 100 | 100 | 100 |
| | (B) Organohydrogensiloxane | | 14 | 14 | 14 | 14 | 14 | 14 | 14 |
| | (C) Thermally conductive filler | C1: Aluminum oxide | 1420 | 700 | 600 | 1500 | 1500 | 900 | 1250 |
| | | C2: Aluminum oxide | 600 | 300 | 300 | 600 | 600 | 500 | 650 |
| | | C3: Aluminum hydroxide | 880 | 540 | 810 | 830 | 1000 | 1100 | 800 |
| | | C4: Aluminum oxide | 800 | 1200 | 700 | 570 | 1000 | 900 | 800 |
| | | C5: Magnesium oxide, BET 0.05 m²/g | 1400 | 900 | 900 | 2000 | 1500 | 1900 | |
| | | C6: Magnesium oxide, BET 0.2 m²/g | | | | | | | 1350 |
| | Total parts by mass of component C | | 5100 | 3640 | 3310 | 5500 | 5600 | 5300 | 4850 |
| | Proportion of aluminum hydroxide, % | | 17 | 15 | 24 | 15 | 18 | 21 | 16 |
| | Proportion of magnesium oxide, % | | 27 | 25 | 27 | 36 | 27 | 36 | 28 |
| | (D) Addition-reaction catalyst | | 0.5 | 0.5 | 0.5 | 0.5 | 0.5 | 0.5 | 0.5 |
| | (E) Addition-reaction controlling agent | | 0.2 | 0.2 | 0.2 | 0.2 | 0.2 | 0.2 | 0.2 |
| | (F) Surface treatment agent | | 200 | 200 | 200 | 200 | 200 | 200 | 200 |
| | (G) Plasticizer | | 10 | 10 | 10 | 10 | 10 | 10 | 10 |

**[Table 2]**

| Comparative Example | | | 1 | 2 | 3 | 4 | 5 | 6 |
|---|---|---|---|---|---|---|---|---|
| Composition, part by mass | (A) Alkenyl group-containing organosiloxane | | 100 | 100 | 100 | 100 | 100 | 100 |
| | (B) Organohydrogensiloxane | | 14 | 14 | 14 | 14 | 14 | 14 |
| | (C) Thermally conductive fille | C1: Aluminum oxide | 500 | 1420 | 500 | 1800 | 1500 | 600 |
| | | C2: Aluminum oxide | 300 | 600 | 200 | 900 | 600 | 250 |
| | | C3: Aluminum hydroxide | 450 | 880 | 1300 | 200 | 800 | 880 |
| | | C4: Aluminum oxide | 400 | 800 | 700 | 700 | 2000 | 550 |
| | | C5: Magnesium oxide, BET 0.05 m²/g | 600 | | 900 | 1500 | 700 | 2800 |
| | | C7: Magnesium oxide, BET 0.5 m²/g | | 1250 | | | | |
| | Total parts by mass of component C | | 2250 | 4950 | 3600 | 5100 | 5600 | 5080 |
| | Proportion of aluminum hydroxide, % | | 20 | 18 | 36 | 4 | 14 | 17 |
| | Proportion of magnesium oxide, % | | 27 | 25 | 25 | 29 | 13 | 55 |
| | (D) Addition-reaction catalyst | | 0.5 | 0.5 | 0.5 | 0.5 | 0.5 | 0.5 |
| | (E) Addition-reaction controlling agent | | 0.2 | 0.2 | 0.2 | 0.2 | 0.2 | 0.2 |
| | (F) Surface treatment agent | | 200 | 200 | 200 | 200 | 200 | 200 |
| | (G) Plasticizer | | 10 | 10 | 10 | 10 | 10 | 10 |

**[Table 3]**

| Example | | 1 | 2 | 3 | 4 | 5 | 6 | 7 |
|---|---|---|---|---|---|---|---|---|
| Evaluation | Viscosity (Pa·s) of composition @ 25°C | 168 | 124 | 105 | 237 | 208 | 242 | 237 |
| | Moldability of composition | Good | Good | Good | Good | Good | Good | Good |
| | Thermal conductivity, W/m·K | 5.2 | 4.0 | 3.6 | 5.9 | 5.6 | 5.1 | 5.6 |
| | Specific gravity, g/cm³ | 2.9 | 2.9 | 2.8 | 3 | 3 | 2.8 | 2.9 |
| | Hardness (Initial) | 19 | 15 | 14 | 23 | 22 | 21 | 24 |
| | Hardness after aging at 85°C and 85%Rh for 1000 hours | 35 | 30 | 27 | 39 | 40 | 37 | 46 |
| | Degree of hardness increase | 16 | 15 | 13 | 16 | 18 | 16 | 23 |

**[Table 4]**

| Comparative Example | | 1 | 2 | 3 | 4 | 5 | 6 |
|---|---|---|---|---|---|---|---|
| Evaluation | Viscosity (Pa·s) of composition @ 25°C | 128 | 242 | 154 | 132 | 175 | 302 |
| | Moldability of composition | Good | Good | Good | Good | Good | Poor |
| | Thermal conductivity, W/m·K | 2.9 | 5.1 | 3.1 | 5.3 | 5.2 | - |
| | Specific gravity, g/cm³ | 2.7 | 2.9 | 2.7 | 3.2 | 3.2 | - |
| | Hardness (Initial) | 16 | 18 | 16 | 17 | 20 | - |
| | Hardness after aging at 85°C and 85%Rh for 1000 hours | 30 | 58 | 30 | 35 | 32 | - |
| | Degree of hardness increase | 14 | 40 | 14 | 18 | 12 | - |

As described in the Tables 3 and 4, the composition of Comparative Example 1 has a total amount of the thermally conductive filler (C) of less than 2500 parts by mass. The thermal conductivity of the molded product obtained from the composition was below 3.5 W. The molding cannot be applied to parts having a high calorific value.

The composition of Comparative Example 2 comprises the magnesium oxide having a specific surface area of greater than 0.4 m²/g. The hardness of the molded product obtained from the composition greatly increased after aging at high temperatures and high humidity, and the reliability was poor.

The composition of Comparative Example 3 has a proportion of aluminum hydroxide greater than 30 wt%. The molded body obtained had a thermal conductivity of lower than 3.5 W/m • K. In particular, on account of the comparison with the composition of Example 3, in which components other than the proportion of aluminum hydroxide are the same, it can be confirmed that, when the proportion of aluminum hydroxide is high, the thermal conductivity decreases.

The composition of Comparative Example 4 has a proportion of aluminum hydroxide less than 10 wt%. The specific gravity of the molded body obtained highly increased and exceeded 3.1 g/cm³. In particular, on account of the comparison with the composition of Example 1, in which components other than the proportion of aluminum hydroxide are the same, it can be confirmed that, when the proportion of aluminum hydroxide is low, the specific gravity highly increases.

The composition of Comparative Example 5 has a proportion of magnesium oxide less than 20 wt%. The molded body which may be obtained had a large increase in the specific gravity and exceeded 3.1 g/cm³. In particular, on account of the comparison with the composition of Example 5, in which components other than the proportion of magnesium oxide are the same, it can be confirmed that, if the proportion of magnesium oxide is low, the increase in the specific gravity becomes large.

The composition of Comparative Example 6 has a proportion of magnesium oxide of greater than 50 wt%. The thermally conductive silicone resin composition had a remarkably high viscosity and was difficult to mold and to provide a cured product.

In contrast, as shown in Tables 1 and 2, the thermally conductive silicone resin composition of the present invention has a good handling property, and the moldability was good. All of the obtained molded bodies had good thermal conductivity, a light weight with a specific gravity of 3.1 g/cm³ or less, a thermal conductivity of 3.5 W/m·K or more, and the thermal conductivity was good. The molded body was excellent in reliability without a remarkable increase in the hardness, even after a high humidity test.

### INDUSTRIAL APPLICABILITY

The thermally conductive silicone resin composition of the present invention provides a thermally conductive silicone molded body which has a good thermal conductivity, has lightweight (the specific gravity is light) and, furthermore, has excellent reliability in high humidity. The resin composition is suitable as a heat transfer material which is used to cool electronic components with heat conduction. For example, the resin composition is suitable as a thermally conductive resin compound and a thermally conductive resin molded body which are arranged between a heat dissipating component and a heat dissipating part in an electronic device, and used for heat dissipation.

## Claims

1. A thermally conductive silicone resin composition comprising the following components (A) to (E):
(A) an organopolysiloxane having at least two alkenyl groups each bonded to a silicon atom in an amount of 100 parts by mass,
(B) an organohydrogen polysiloxane having at least two hydrogen atoms each bonded to a silicon atom in an amount such that the ratio of the number of the hydrogen atoms bonded to a silicon atom relative to the number of the alkenyl group in component (A) is 0.1 to 2,
(C) a thermally conductive filler in an amount of 2500 to 6000 parts by mass,
(D) a catalytic amount of an addition-reaction catalyst, and
(E) an addition-reaction controlling agent in an amount of 0.01 to 1 parts by mass, wherein the thermally conductive filler (C) comprises magnesium oxide having a specific surface area of 0.4 m²/g or less in an amount of 20 to 50 wt %, and aluminum hydroxide in an amount of 10 to 30 wt%, relative to the total weight of component (C).

2. The thermally conductive silicone resin composition according to claim 1, wherein the thermally conductive filler (C) comprises at least one selected from aluminum oxide, aluminum nitride, boron nitride, zinc oxide and magnesium hydroxide.

3. The thermally conductive silicone resin composition according to claim 2, wherein the thermally conductive filler (C) comprises 20 to 70 wt% of aluminum oxide having a volume average particle diameter of 1 to 90 µm, relative to the total weight of component (C).

4. The thermally conductive silicone resin composition according to any one of claims 1 to 3, wherein the volume average particle diameter of the magnesium oxide is 50 to 120 µm.

5. The thermally conductive silicone resin composition according to any one of claims 1 to 4, wherein the volume average particle diameter of the aluminum hydroxide is 1 to 50 µm.

6. The thermally conductive silicone resin composition according to any one of claims 1 to 5, further comprising 100 to 300 parts by mass of (F) a dimethylpolysiloxane represented by the following formula (1) and having a trialkoxysilyl group at one end of the molecular chain: 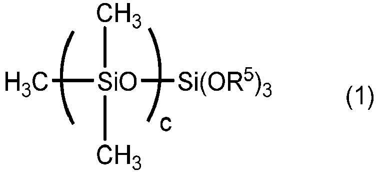 wherein R⁵ is, independently of each other, an alkyl group having 1 to 6 carbon atoms, and c is an integer of from 5 to 100.

7. The thermally conductive silicone resin composition according to any one of claims 1 to 6, further comprising 1 to 40 parts by mass of (G) an organopolysiloxane represented by the following general formula (2):
R⁶-(SiR⁶₂O)_{d}SiR⁶₃ (2)
wherein R⁶ is, independently of each other, a monovalent hydrocarbon group having 1 to 8 carbon atoms and no aliphatic unsaturated bond, and d is an integer of from 5 to 2000, and having a kinematic viscosity at 25°C of 10 to 100,000 mm²/s.

8. The thermally conductive silicone resin composition according to any one of claims 1 to 7, having a viscosity at 25°C from 50 Pa·s to 600 Pa·s.

9. A cured product obtained by curing the thermally conductive silicone resin composition according to any one of claims 1 to 8.

10. The cured product according to claim 9, having a specific gravity of 3.1 g/cm³ or less.

11. The cured product according to claim 9 or claim 10, having a thermal conductivity of 3.5 W/m • K or more.

12. The cured product according to any one of claims 9 to 11, having an Asker C hardness of 60 or less.

13. A thermally conductive silicone heat-dissipating sheet comprising a PET film and the cured product according to any one of claims 9 to 12.

## Patentansprüche

1. Wärmeleitfähige Silikonharzzusammensetzung, umfassend die folgenden Komponenten (A) bis (E):
(A) ein Organopolysiloxan mit mindestens zwei Alkenylgruppen, die jeweils an ein Siliciumatom gebunden sind, in einer Menge von 100 Massenteilen,
(B) ein Organohydrogenpolysiloxan mit mindestens zwei Wasserstoffatomen, die jeweils an ein Siliciumatom gebunden sind, in einer derartigen Menge, dass das Verhältnis der Anzahl der Wasserstoffatome, die an ein Siliciumatom gebunden sind, bezogen auf die Anzahl der Alkenylgruppen in der Komponente (A) 0,1 bis 2 ist,
(C) einen wärmeleitfähigen Füllstoff in einer Menge von 2500 bis 6000 Massenteilen,
(D) eine katalytische Menge eines Additionsreaktionskatalysators, und
(E) ein die Additionsreaktion kontrollierendes Mittel in einer Menge von 0,01 bis 1 Massenteil,
wobei der wärmeleitfähige Füllstoff (C) Magnesiumoxid mit einem spezifischen Oberflächenbereich von 0,4 m²/g oder weniger in einer Menge von 20 bis 50 Gew.-% und Aluminiumhydroxid in einer Menge von 10 bis 30 Gew.-% umfasst, bezogen auf das Gesamtgewicht der Komponente (C).

2. Wärmeleitfähige Silikonharzzusammensetzung nach Anspruch 1, wobei der wärmeleitfähige Füllstoff (C) mindestens eines umfasst, ausgewählt aus Aluminiumoxid, Aluminiumnitrid, Bornitrid, Zinkoxid und Magnesiumhydroxid.

3. Wärmeleitfähige Silikonharzzusammensetzung nach Anspruch 2, wobei der wärmeleitfähige Füllstoff (C) 20 bis 70 Gew.-% Aluminiumoxid mit einem volumengemittelten Teilchendurchmesser von 1 bis 90 µm umfasst, bezogen auf das Gesamtgewicht der Komponente (C).

4. Wärmeleitfähige Silikonharzzusammensetzung nach einem der Ansprüche 1 bis 3, wobei der volumengemittelte Teilchendurchmesser des Magnesiumoxids 50 bis 120 µm ist.

5. Wärmeleitfähige Silikonharzzusammensetzung nach einem der Ansprüche 1 bis 4, wobei der volumengemittelte Teilchendurchmesser des Aluminiumhydroxids 1 bis 50 µm ist.

6. Wärmeleitfähige Silikonharzzusammensetzung nach einem der Ansprüche 1 bis 5, weiterhin umfassend 100 bis 300 Massenteile von (F) einem Dimethylpolysiloxan, dargestellt durch die folgende Formel (1) und mit einer Trialkoxysilylgruppe an einem Ende der Molekülkette: 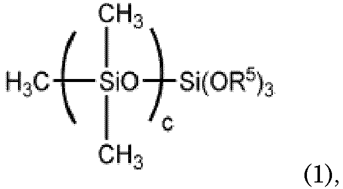 wobei R⁵ unabhängig voneinander eine Alkylgruppe mit 1 bis 6 Kohlenstoffatomen ist, und c eine ganze Zahl von von 5 bis 100 ist.

7. Wärmeleitfähige Silikonharzzusammensetzung nach einem der Ansprüche 1 bis 6, weiterhin umfassend 1 bis 40 Massenteile von (G) einem Organopolysiloxan, dargestellt durch die folgende allgemeine Formel (2):
R⁶(SiR⁶₂O)_{d}SiR⁶₃ (2),
wobei R⁶ unabhängig voneinander eine einwertige Kohlenwasserstoffgruppe mit 1 bis 8 Kohlenstoffatomen und keiner aliphatisch ungesättigten Bindung ist, und d eine ganze Zahl von von 5 bis 2000 ist, und mit einer kinematischen Viskosität bei 25 °C von 10 bis 100.000 mm²/s.

8. Wärmeleitfähige Silikonharzzusammensetzung nach einem der Ansprüche 1 bis 7 mit einer Viskosität bei 25 °C von 50 Pa·s bis 600 Pa·s.

9. Gehärtetes Produkt, erhalten durch Härten der wärmeleitfähigen Silikonharzzusammensetzung nach einem der Ansprüche 1 bis 8.

10. Gehärtetes Produkt nach Anspruch 9 mit einer spezifischen Dichte von 3,1 g/cm³ oder weniger.

11. Gehärtetes Produkt nach Anspruch 9 oder Anspruch 10 mit einer Wärmeleitfähigkeit von 3,5 W/m·K oder mehr.

12. Gehärtetes Produkt nach einem der Ansprüche 9 bis 11 mit einer Asker-C-Härte von 60 oder weniger.

13. Wärmeleitfähiger, wärmeabführender Silikonbogen, umfassend eine PET-Folie und das gehärtete Produkt nach einem der Ansprüche 9 bis 12.

## Revendications

1. Composition de résine siliconée thermiquement conductrice comprenant les composants (A) à (E) suivants :
(A) un organopolysiloxane ayant au moins deux groupes alcényle liés chacun à un atome de silicium en une quantité de 100 parties en masse,
(B) un organohydrogénopolysiloxane ayant au moins deux atomes d'hydrogène liés chacun à un atome de silicium en une quantité telle que le rapport du nombre d'atomes d'oxygène liés à un atome de silicium au nombre de groupes alcényle dans le composant (A) soit de 0,1 à 2,
(C) une charge thermiquement conductrice en une quantité de 2500 à 6000 parties en masse,
(D) une quantité catalytique d'un catalyseur de réaction d'addition, et
(E) un agent de contrôle de réaction d'addition en une quantité de 0,01 à 1 partie en masse,
dans laquelle la charge thermiquement conductrice (C) comprend de l'oxyde de magnésium ayant une surface spécifique de 0,4 m²/g en une quantité de 20 à 50 % en poids, et de l'hydroxyde d'aluminium en une quantité de 10 à 30 % en poids par rapport au poids total du composant (C).

2. Composition de résine siliconée thermiquement conductrice selon la revendication 1, dans laquelle la charge thermiquement conductrice (C) comprend au moins l'un choisi parmi l'oxyde d'aluminium, le nitrure d'aluminium, le nitrure de bore, l'oxyde de zinc et l'hydroxyde de magnésium.

3. Composition de résine siliconée thermiquement conductrice selon la revendication 2, dans laquelle la charge thermiquement conductrice (C) comprend 20 à 70 % en poids d'oxyde d'aluminium ayant une granulométrie moyenne en volume de 1 à 90 µm, par rapport au poids total du composant (C).

4. Composition de résine siliconée thermiquement conductrice selon l'une quelconque des revendications 1 à 3, dans laquelle la granulométrie moyenne en volume de l'oxyde de magnésium est de 50 à 120 µm.

5. Composition de résine siliconée thermiquement conductrice selon l'une quelconque des revendications 1 à 4, dans laquelle la granulométrie moyenne en volume de l'hydroxyde d'aluminium est de 1 à 50 µm.

6. Composition de résine siliconée thermiquement conductrice selon l'une quelconque des revendications 1 à 5, comprenant en outre 100 à 300 parties en masse de (F) un diméthylpolysiloxane représenté par la formule (1) qui suit et ayant un groupe trialcoxysilyle à une extrémité de la chaîne moléculaire : 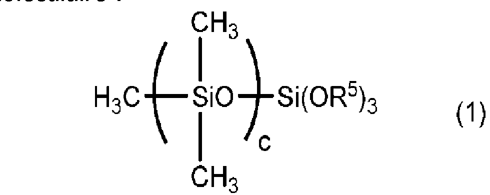 dans laquelle chaque R⁵ est, indépendamment des autres, un groupe alkyle ayant 1 à 6 atomes de carbone, et c est un entier de 5 à 100.

7. Composition de résine siliconée thermiquement conductrice selon l'une quelconque des revendications 1 à 6, comprenant en outre 1 à 40 parties en masse de (C) un organopolysiloxane représenté par la formule générale (2) suivante :
R⁶-(SiR⁶₂O)_{d}SiR⁶₃ (2)
dans laquelle chaque R⁶ est, indépendamment des autres, un groupe hydrocarboné monovalent ayant 1 à 8 atomes de carbone et n'ayant pas de liaison insaturée aliphatique, et d est un entier de 5 à 2000,
et ayant une viscosité cinématique à 25°C de 10 à 100 000 mm²/s.

8. Composition de résine siliconée thermiquement conductrice selon l'une quelconque des revendications 1 à 7, ayant une viscosité à 25°C de 50 Pa·s à 600 Pa·s.

9. Produit durci obtenu par durcissement de la composition de résine siliconée thermiquement conductrice de l'une quelconque des revendications 1 à 8.

10. Produit durci selon la revendication 9, ayant une masse volumique de 3,1 g/cm³ ou moins.

11. Produit durci selon la revendication 9 ou la revendication 10, ayant une conductivité thermique de 3,5 W/m·k ou plus.

12. Produit durci selon l'une quelconque des revendications 9 à 11, ayant une dureté Asker C de 60 ou moins.

13. Feuille dissipatrice de chaleur siliconée thermiquement conductrice comprenant un film de PET et le produit durci de l'une quelconque des revendications 9 à 12.
